# EUROPEAN PATENT SPECIFICATION

(11) **EP 2 254 365 B1**
(45) Date of publication and mention of the grant of the patent: **19.04.2017**
(21) Application number: 10163516.7
(22) Date of filing: 21.05.2010
(51) Int. Cl.: H04W 24/04

(54) **Wireless access method, device and system**
Drahtloses Zugriffsverfahren, Vorrichtung und System
Procédé, dispositif et système d'accès sans fil

(30) Priority: 22.05.2009 CN 200910085508
(43) Date of publication of application: 24.11.2010
(73) Proprietor: Huawei Technologies Co., Ltd., Longgang District Shenzhen, Guangdong 518129 (CN)
(72) Inventor: Sun, Qiang, 518129, Shenzhen (CN)
(74) Representative: Isarpatent

(56) References cited:
- JP-A- 2004 072 198
- JP-A- 2005 064 711

## Description

### FIELD OF THE TECHNOLOGY

The present invention relates to the field of communication technology, and more particularly to a wireless access method, a wireless access device, and a wireless access system.

### BACKGROUND OF THE INVENTION

A femto cell is a solution for expanding indoor coverage of mobile communication. The femto cell can transmit voice signals and call data sent by user equipment (UE) to a third-generation (3G) digital communication core network based on a standard interface. As the femto cell introduced indoors, an access point (AP) of the Universal Mobile Telecommunications System (UMTS) is connected to an access gateway (AG) at a core network (CN) side over an Internet protocol (IP) network by using an asymmetric digital subscriber line (ADSL) modem, and the AG is connected to the CN of the existing UMTS through a standard interface between the radio access network and the CN, thereby forming a home network and small/medium-sized company network. The femto cell can effectively improve the indoor coverage and quality of service (QoS) and achieve a high data transmission rate, so that an operator can expand the signal coverage at a low cost without deploying macro base station.

In the above technical solution, when a connection error occurs between the AP and the AG, the UE will encounter call drop or network disconnection problems and therefore fails to use communication services normally, so that the network performance is deteriorated.

A connection error occurring between an AP and AG is disclosed in document JP2004072198.

### SUMMARY OF THE INVENTION

Accordingly, the present invention is directed to a wireless access method, a wireless access device, and a wireless access system, so that when a communication link between a wireless AP and an AG fails, the wireless AP can transmit communication data through other wireless AP under the AG, so as to enable a UE to normally use communication services, thereby improving network stability.

The reader is referred to the appended independent claims. Some preferred features are laid out in the dependent claims 1.

In an aspect, the present invention provides a wireless access method, which includes the following steps.
if a disconnection of a first communication link between a first wireless AP and an access gateway, AG, occurs, searching , by the first wireless AP, for a second wireless AP;
establishing, by the first wireless AP, through the second wireless AP, a second communication link with the AG for data transmission with the AG.

In an aspect, the present invention further provides a wireless access device, which includes a search module, a link establishment module.

The search module is adapted to search for a second wireless AP, if a disconnection of a first communication link between a first wireless AP and an access gateway, AG, occurs;
the link establishment module is adapted to establish, through the second wireless AP, a second communication link between the first wireless AP and the AG.

In an aspect, the present invention further provides a wireless access system, which includes an AG and a plurality of wireless APs.

At least two of the APs include the wireless access device in the above technical solution.

Through the wireless access method, the wireless access device, and the wireless access system provided in the aspects of the present invention, the first wireless AP searches for the second wireless AP from other wireless AP(s) under the AG, and when the first communication link between the first wireless AP and the AG is disconnected, the first wireless AP establishes the second communication link with the AG through the second wireless AP. In this way, when the first communication link is disconnected, the UE can normally perform communication services with the AG through the second communication link, thereby improving the network stability.

### BRIEF DESCRIPTION OF THE DRAWINGS

To illustrate the technical solution according to the embodiments of the present invention or in the prior art more clearly, the accompanying drawings for describing the embodiments or the prior art are provided below. Apparently, the accompanying drawings in the following description are only some embodiments of the present invention, and person having ordinary skills in the art can derive other drawings from the accompanying drawings without creative efforts.
FIG. 1 is a schematic flow chart of a wireless access method according to a first aspect of the present invention;
FIG. 2 is a schematic flow chart of a wireless access method according to a second aspect of the present invention;
FIG. 3 is a schematic flow chart of a wireless access method according to a third aspect of the present invention;
FIG. 4 is a schematic structural view of a wireless access device according to a fourth aspect of the present invention;
FIG. 5 is a schematic structural view of a wireless access device according to a fifth aspect of the present invention;
FIG. 6 is a schematic structural view of a wireless access system according to a sixth aspect of the present invention; and
FIG. 7 is a systematic schematic view of accessing a CN by a UE through a wireless access system according to a seventh aspect of the present invention.

### DETAILED DESCRIPTION OF THE EMBODIMENTS

The following detailed description is directed to the technical solution of the present invention with reference to the accompanying drawings. However, the embodiments to be described are only part of, rather than all of, the embodiments of the present invention. Person having ordinary skills in the art can derive other embodiments from the embodiments provided herein without making any creative effort, and all such embodiments are covered in the protection scope of the present invention.

In the embodiments of the present invention, a wireless AP is an access point for a UE to access a wired network. The wireless AP may serve as a base transceiver station (BTS) in a Global System for Mobile Communications (GSM) network, or serve as a Node B in a Wideband-Code Division Multiple Access (WCDMA) network. In the embodiments of the present invention, an AG is an intermediate device for connecting a radio access network with a CN, which may serve as a base station controller (BSC) in the GSM network, or serve as a radio network controller (RNC) in the WCDMA network. Specifically, the wireless AP can perform data communication with the AG through an ADSL modem or a cable modem (CM).

In the embodiments of the present invention, the wireless APs may be configured in a building, or between neighboring buildings, or within the same cell, and the coverage of each wireless AP may be determined according to a signal transmission power thereof. In the 3G wireless communication system, wireless APs may perform data communication with each other through the 3G wireless communication protocol. In the Worldwide Interoperability for Microwave Access (WiMax) wireless communication system, wireless APs may perform data communication with each other through the IEEE802.16 protocol. In the Wireless Fidelity (WiFi) wireless communication system, wireless APs may perform data communication with each other through the 802.11a/b/g protocol. In other wireless communication systems, corresponding wireless communication protocols are used.

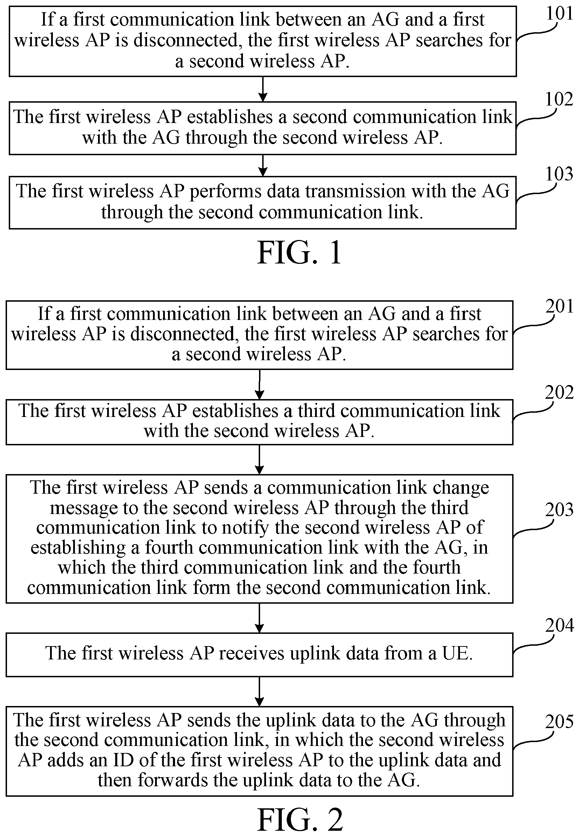

FIG. 1 is a schematic flow chart of a wireless access method according to a first embodiment of the present invention. As shown in FIG. 1, this embodiment specifically includes the following steps.

In step 101, if a first communication link between an AG and a first wireless AP is disconnected, the first wireless AP searches for a second wireless AP.

In step 102, the first wireless AP establishes a second communication link with the AG through the second wireless AP.

In step 103, the first wireless AP performs data transmission with the AG through the second communication link.

Through the wireless access method provided in this embodiment of the present invention, when the first communication link between the first wireless AP and the AG is disconnected, the first wireless AP performs data transmission via the second communication link established with the AG through the second wireless AP, so that the UE can normally implement communication services, thereby improving the network stability.

FIG. 2 is a schematic flow chart of a wireless access method according to a second embodiment of the present invention. As shown in FIG. 2, this embodiment specifically includes the following steps.

In step 201, if a first communication link between an AG and a first wireless AP is disconnected, the first wireless AP searches for a second wireless AP.

In step 202, the first wireless AP establishes a third communication link with the second wireless AP.

In step 203, the first wireless AP sends a communication link change message to the second wireless AP through the third communication link to notify the second wireless AP of establishing a fourth communication link with the AG, in which the third communication link and the fourth communication link form the second communication link.

In step 204, the first wireless AP receives uplink data from a UE.

In step 205, the first wireless AP sends the uplink data to the AG through the second communication link, in which the second wireless AP adds an ID of the first wireless AP to the uplink data and then forwards the uplink data to the AG.

Exemplarily, in step 201, when searching for the second wireless AP, the first wireless AP may obtain signal transmission powers of other wireless AP(s) that share the same AG with the first wireless AP according to strength of signals transmitted by the other wireless AP(s), and take the wireless AP that has the highest signal transmission power as the second wireless AP. The detection process may be specifically described as follows: the first wireless AP obtains the signal transmission powers of the other wireless AP(s), compares the signal transmission powers of the other wireless AP(s) to find a wireless AP that has the highest signal transmission power from the other wireless AP(s), and takes the wireless AP as the second wireless AP. Alternatively, the first wireless AP obtains distance information of the other wireless AP(s) that share the same AG with the first wireless AP away from the first wireless AP, finds the closest wireless AP, and takes the wireless AP as the second wireless AP.

Exemplarily, in step 202, after finding the second wireless AP, the first wireless AP sends a third communication link request message to the second wireless AP, and after receiving the third communication link request message, the second wireless AP obtains the ID of the first wireless AP, and establishes a third communication link with the first wireless AP. The ID of the first wireless AP may be sent to the second wireless AP when the first wireless AP finds the second wireless AP in step 201, or carried in the third communication link request message.

Exemplarily, in step 203, after receiving the communication link change message, the second wireless AP obtains the ID of the first wireless AP, and establishes a fourth communication link with the AG, so as to enable the AG to send downlink data, intended to be sent to the first wireless AP, to the second wireless AP through the fourth communication link.

Exemplarily, in step 205, if the first wireless AP needs to send uplink data to the AG through the second communication link, specifically, the first wireless AP firstly sends the uplink data to the second wireless AP through the third communication link, and after receiving the uplink data, the second wireless AP adds the ID of the first wireless AP to the uplink data, and then sends the uplink data with the ID of the first wireless AP to the AG through the fourth communication link, so that the AG can identify according to the ID of the first wireless AP that the uplink data sent from the second wireless AP is from the UE served by the first wireless AP.

The ID of the first wireless AP in this embodiment may specifically be a communication link number assigned by the AG to the first wireless AP when the first communication link is established between the AG and the first wireless AP, or an identity that can be identified by the wireless APs having established communication links with the AG.

Through the wireless access method provided in this embodiment of the present invention, the second communication link is established between the first wireless AP and the AG, so that after a communication link between the first wireless AP and the AG is disconnected, the second wireless AP adds the ID of the first wireless AP to the uplink data, so as to enable the AG to identify that the uplink data is from the UE served by the first wireless AP. Thus, the UE can continue data transmission through the second communication link between the first wireless AP and the AG, so as to ensure that the UE can normally implement communication services, thereby improving the network stability.

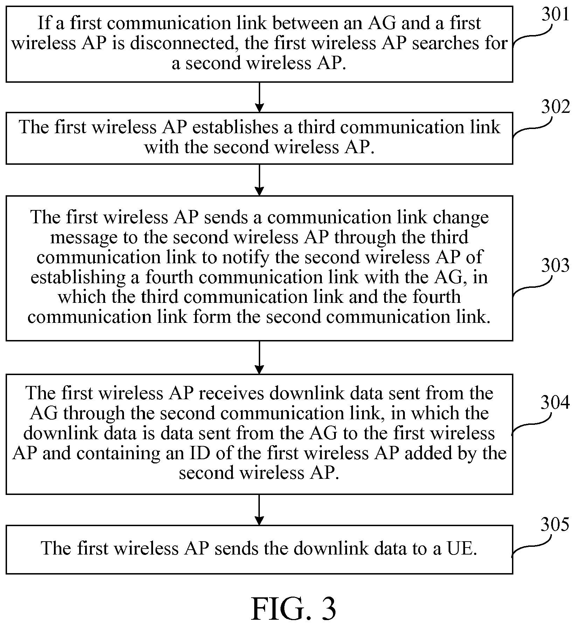

FIG. 3 is a schematic flow chart of a wireless access method according to a third embodiment of the present invention. As shown in FIG. 3, this embodiment specifically includes the following steps.

In step 301, if a first communication link between an AG and a first wireless AP is disconnected, the first wireless AP searches for a second wireless AP.

In step 302, the first wireless AP establishes a third communication link with the second wireless AP.

In step 303, the first wireless AP sends a communication link change message to the second wireless AP through the third communication link to notify the second wireless AP of establishing a fourth communication link with the AG, in which the third communication link and the fourth communication link form the second communication link.

In step 304, the first wireless AP receives downlink data sent from the AG through the second communication link, in which the downlink data is data sent from the AG to the first wireless AP and containing an ID of the first wireless AP added by the second wireless AP.

In step 305, the first wireless AP sends the downlink data to a UE.

Exemplarily, in step 301, when searching for the second wireless AP, the first wireless AP may obtain signal transmission powers of other wireless AP(s) that share the same AG with the first wireless AP according to strength of signals transmitted by the other wireless AP(s), and choose the wireless AP that has the highest signal transmission power as the second wireless AP. The detection process may be specifically described as follows: the first wireless AP obtains the signal transmission powers of the other wireless AP(s), compares the signal transmission powers of the other wireless AP(s) to find a wireless AP that has the highest signal transmission power from the other wireless AP(s), and takes the wireless AP as the second wireless AP. Alternatively, the first wireless AP obtains other wireless AP(s) that share the same AG with the first wireless AP according to distance information, finds the closest wireless AP by obtaining the distance information of the other wireless AP(s) away from the first wireless AP, and takes the wireless AP as the second wireless AP. When finding the second wireless AP, the first wireless AP may send its ID to the second wireless AP, so as to enable the second wireless AP to identify that the second communication link is established with the first wireless AP.

Exemplarily, in step 302, the first wireless AP sends a third communication link request message to the second wireless AP, and after receiving the third communication link request message, the second wireless AP obtains the ID of the first wireless AP, and establishes a third communication link with the first wireless AP. The ID of the first wireless AP may be sent to the second wireless AP when the first wireless AP finds the second wireless AP in step 301, or carried in the third communication link request message.

Exemplarily, in step 303, after receiving the communication link change message, the second wireless AP obtains the ID of the first wireless AP, and establishes a fourth communication link with the AG, so as to enable the AG to send downlink data, intended to be sent to the first wireless AP, to the second wireless AP through the fourth communication link.

Exemplarily, in step 304, if the AG needs to send downlink data to a UE served by the first wireless AP through the second communication link, specifically, the AG firstly sends the downlink data to the second wireless AP through the fourth communication link, and after receiving the downlink data, the second wireless AP adds the ID of the first wireless AP to the downlink data, and then sends the downlink data with the ID of the first wireless AP to the first wireless AP through the third communication link, so that the first wireless AP sends the downlink data to the UE.

The ID of the first wireless AP in this embodiment may specifically be a communication link number assigned by the AG to the first wireless AP when the first communication link is established between the AG and the first wireless AP, or an identity that can be identified by the wireless APs having established communication links with the AG.

Through the wireless access method provided in this embodiment of the present invention, the second communication link is established between the first wireless AP and the AG, so that after a communication link between the first wireless AP and the AG is disconnected, the second wireless AP adds the ID of the first wireless AP to the downlink data, so as to enable the first wireless AP to identify that the downlink data is data sent from the AG and forwarded by the second wireless AP. Thus, the UE can continue data transmission through the second communication link between the first wireless AP and the AG, so as to ensure that the UE can normally implement communication services, thereby improving the network stability.

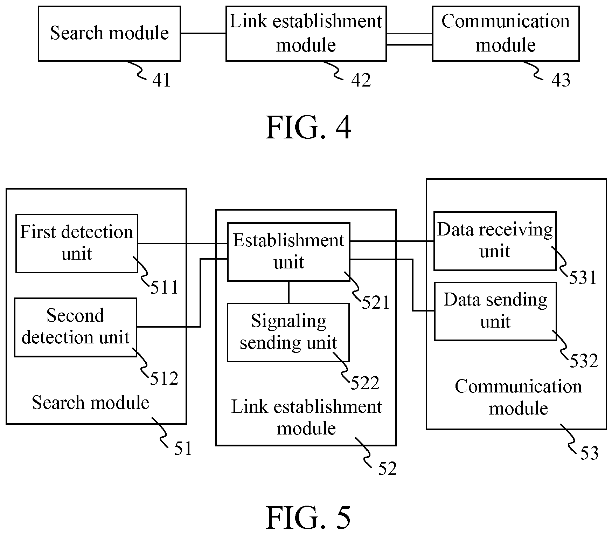

FIG. 4 is a schematic structural view of a wireless access device according to a fourth embodiment of the present invention. This embodiment of the present invention can realize the method according to the embodiments shown in FIG. 1 to FIG. 3. As shown in FIG. 4, the wireless access device in this embodiment of the present invention includes a search module 41, a link establishment module 42, and a communication module 43.

The search module 41 is connected to the link establishment module 42, and the link establishment module 42 is connected to the communication module 43.

Specifically, an operating process of the wireless access device in this embodiment is described as follows. If a first communication link between an AG and a first wireless AP is disconnected, the search module 41 searches for a second wireless AP; the link establishment module 42 establishes a second communication link with the AG through the second wireless AP found by the search module 41; and the communication module 43 performs data transmission with the AG through the second communication link established by the link establishment module 42.

Through the wireless access device provided in this embodiment of the present invention, when the first communication link between the first wireless AP and the AG is disconnected, the search module 41 searches for the second wireless AP under the AG, and the link establishment module 42 establishes the second communication link with the AG through the second wireless AP, so that when the first communication link is disconnected, the UE can normally implement communication services with the AG through the second communication link, thereby improving the network stability.

FIG. 5 is a schematic structural view of a wireless access device according to a fifth embodiment of the present invention. This embodiment of the present invention can realize the method according to the embodiments shown in FIG. 1 to FIG. 3. As shown in FIG. 5, the wireless access device in this embodiment of the present invention includes a search module 51, a link establishment module 52, and a communication module 53.

The search module 51 is connected to the link establishment module 52, and the link establishment module 52 is connected to the communication module 53.

Specifically, an operating process of the wireless access device in this embodiment is described as follows. If a first communication link between an AG and a first wireless AP is disconnected, the search module 51 searches for a second wireless AP; the link establishment module 52 establishes a second communication link with the AG through the second wireless AP found by the search module 51; and the communication module 53 performs data transmission with the AG through the second communication link established by the link establishment module 52.

Furthermore, the search module 51 may include a first detection unit 511, in which if the first communication link between the AG and the first wireless AP is disconnected, the first detection unit 511 detects a wireless AP that has the highest signal transmission power as the second wireless AP. In addition, the search module 51 may further include a second detection unit 512, in which if the first communication link between the AG and the first wireless AP is disconnected, the second detection unit 512 detects a wireless AP closest to the first wireless AP under the AG as the second wireless AP. It is selected based on the pre-configuration whether to search for the second wireless AP according to the signal transmission power through the first detection unit 511 or according to the distance information through the second detection unit 512.

Moreover, the link establishment module 52 may include an establishment unit 521 and a signaling sending unit 522. The establishment unit 521 establishes a third communication link between the first wireless AP and the second wireless AP. The signaling sending unit 522 sends a communication link change message to the AG through the third communication link established by the establishment unit 521 to notify the second wireless AP of establishing a fourth communication link with the AG, in which the third communication link and the fourth communication link form the second communication link.

In addition, the communication module 53 may include a data receiving unit 531 and a data sending unit 532.

When a UE needs to send uplink data to the AG through the first wireless AP, the data receiving unit 531 receives the uplink data from the UE, and the data sending unit 532 sends the uplink data to the AG through the second communication link established by the link establishment module 52. Specifically, the data sending unit 532 sends the uplink data to the second wireless AP through the third communication link established by the establishment unit 521, and the second wireless AP adds an ID of the first wireless AP to the uplink data, and forwards the uplink data to the AG through the fourth communication link. When the AG needs to send downlink data to the UE under the first wireless AP through the second communication link, the data receiving unit 531 receives the downlink data sent from the AG through the second communication link established by the link establishment module 52, and the data sending unit 532 sends the downlink data to the UE under the first wireless AP. Specifically, the AG sends the downlink data to the second wireless AP through the fourth communication link, the second wireless AP adds an ID of the first wireless AP to the downlink data, and sends the downlink data to the data receiving unit 531 through the third communication link established by the establishment unit 521, and the data sending unit 532 sends the downlink data to the UE.

Furthermore, in this embodiment of the present invention, the signaling sending unit 522 and the data sending unit 532 may be integrated into one sending unit, which is capable of sending the communication link change message to the AG through the third communication link, sending the uplink data to the second wireless AP through the third communication link, and sending the downlink data to the UE under the first wireless AP.

Through the wireless access device provided in this embodiment of the present invention, when the first communication link between the first wireless AP and the AG is disconnected, the first detection unit 511 detects the wireless AP that has the highest signal transmission power as the second wireless AP, so as to ensure the normal transmission of data signals between the UE and the AG; the signaling sending unit 522 sends the communication link change message to the AG through the third communication link established by the establishment unit 521 to notify the second wireless AP of establishing the fourth communication link with the AG, so that when the first communication link is disconnected, the UE can normally implement communication services with the AG through the second communication link formed by the third communication link and the fourth communication link, thereby improving the network stability.

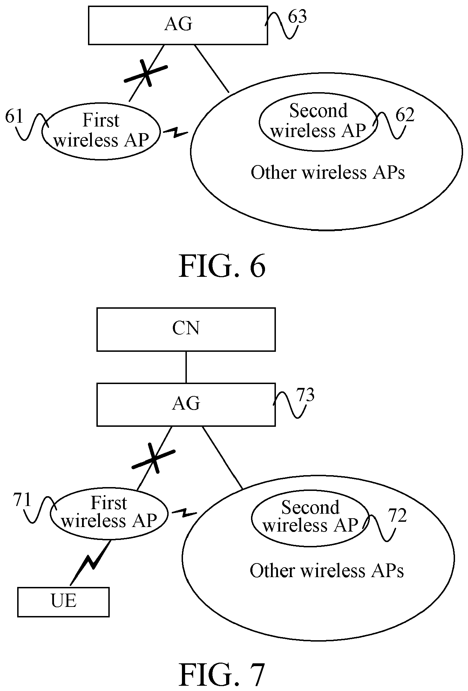

FIG. 6 is a schematic structural view of a wireless access system according to a sixth embodiment of the present invention. As shown in FIG. 6, the wireless access system in this embodiment of the present invention includes an AG 63, a first wireless AP 61, and other wireless AP(s) other than the first wireless AP. The other wireless AP(s) include at least a second wireless AP 62. The wireless AP in this embodiment of the present invention includes the wireless access device of the embodiments shown in FIG. 4 and FIG. 5, and the first wireless AP communicates with the AG 63 through the wireless access device.

In this embodiment of the present invention, if a first communication link between the AG 63 and the first wireless AP 61 is disconnected, the wireless access device in the first wireless AP 61 searches for the second wireless AP 62 from the other wireless AP(s) under the AG 63, and the first wireless AP 61 establishes a second communication link with the AG 63 through the second wireless AP 62, so that the UE can perform data transmission with the AG 63 through the second communication link formed between the first wireless AP 61 and the AG 63.

Through the wireless access system provided in this embodiment of the present invention, the first wireless AP 61 finds the second wireless AP 62 from the other wireless AP(s) under the AG 63, and when the first communication link between the first wireless AP 61 and the AG 63 is disconnected, the first wireless AP 61 establishes the second communication link with the AG 63 through the second wireless AP 62, so that when the first communication link is disconnected, the UE can normally implement communication services with the AG 63 through the second communication link, thereby improving the network stability.

Furthermore, in this embodiment of the present invention, the second wireless AP 62 may be a wireless AP that has the highest signal transmission power under the AG. Alternatively, the second wireless AP 62 may be a wireless AP closest to the first wireless AP under the AG 63.

FIG. 7 is a systematic schematic view of accessing a CN by a UE through a wireless access system according to a seventh embodiment of the present invention. As shown in FIG. 7, a UE communicates with an AG 73 through a first wireless AP 71, and is connected to a CN for data transmission. When a first communication link between the AG 73 and the first wireless AP 71 is disconnected, the first wireless AP 71 finds a second wireless AP 72 from other wireless AP(s) under the AG 73, and the first wireless AP 71 establishes a second communication link with the AG 73 through the second wireless AP 72, so that when the first communication link is disconnected, the UE can implement communication services through the second communication link between the first wireless AP 71 and the AG 73, and perform data transmission with the CN through the AG, thereby improving the network stability.

In the systematic schematic view shown in FIG. 7, in order to comply with the 3rd Generation Partnership Project (3GPP) Release 6 standard and for the purpose of forward compatibility with the 3GPP Release 99/4/5, an interface between the UE and the wireless AP may be a standard air interface, so that the UE can access the AP under various 3G standards. An interface from the wireless AP to the AG is an Iu-based enhanced interface architecture, which complies with the idea of flat, all-IP architecture of next generation network (NGN), and gets ready for the seamless evolution towards System Architecture Evolution/Long Term Evolution (SAE/LTE) in terms of the architecture. An interface between the AG and a mobile CN is a standard Iu Circuit Switched/Packet Switched (CS/PS) interface, so that the AG conveniently accesses the existing mobile CN, and thus forms a unified broadband mobile network with a macro network, thereby achieving the seamless connection from coverage to service.

The method, the device, and the system according to the first to seventh embodiments may be implemented in any communication system network such as a GSM network or WCDMA network.

Person having ordinary skill in the art may understand that all or part of the steps of the method according to the embodiments of the present invention may be implemented by a program instructing relevant hardware. The program may be stored in a computer readable storage medium. When the program runs, the steps of the method according to the embodiments of the present invention are performed. The storage medium may be any medium that is capable of storing program codes, such as a magnetic disk, a Compact Disk Read-Only Memory (CD-ROM), a Read-Only Memory (ROM) or a Random Access Memory (RAM).

It should be noted that the above embodiments are merely provided for elaborating the technical solutions of the present invention, but not intended to limit the present invention. Although the present invention has been described in detail with reference to the foregoing embodiments, it is apparent that person having ordinary skill in the art can make various modifications and variations to the invention without departing from the spirit and scope of the invention. The invention shall cover the modifications and variations provided that they fall in the scope of protection defined by the following claims or their equivalents.

## Claims

1. A wireless access method, the method comprises:
if a disconnection of a first communication link between a first wireless access point, AP, and an access gateway, AG, occurs, searching (101), by the first wireless AP, for a second wireless AP from other wireless AP(s) that share the same AG with the first wireless AP;
obtaining the signal transmission powers of the other wireless AP(s), by the first wireless AP, comparing signal transmission powers of the other wireless AP(s) to find a wireless AP that has the highest signal transmission power from the other wireless AP(s), and taking the wireless AP as the second wireless AP; or
obtaining distance information of the other wireless AP(s), by the first wireless AP, that share the same AG with the first wireless AP away from the first wireless AP, finding the closest wireless AP, and taking the wireless AP as the second wireless AP;establishing (102), by the first wireless AP, through the second wireless AP, a second communication link with the AG for data transmission with the AG.

2. The method according to claim 1, wherein the establishing through the second wireless AP a second communication link with the AG comprises:
establishing (202), by the first wireless AP, a third communication link with the second wireless AP; and
sending (203), by the first wireless AP, a communication link change message to the second wireless AP through the third communication link to notify the second wireless AP of establishing a fourth communication link with the AG, wherein the third communication link and the fourth communication link form the second communication link.

3. The method according to any one of claims 1 to 2, further comprising:
receiving (204), by the first wireless AP, uplink data from a user equipment, UE, served by the first wireless AP and sending (205) the uplink data to the AG through the second communication link, wherein the second wireless AP adds an identification, ID, of the first wireless AP to the uplink data and then forwards the uplink data to the AG;
or further comprising:
receiving (304), by the first wireless AP, downlink data from the AG through the second communication link, wherein the downlink data contains an ID of the first wireless AP added by the second wireless AP, and sending (305) the downlink data to the UE served by the first wireless AP.

4. The method according to claim 1, wherein the first wireless AP is capable of data communication with the second wireless AP through a third communication link between the first wireless AP and second wireless AP, wherein the establishing through the second wireless AP a second communication link with the AG comprises:
sending (203), by the first wireless AP, a communication link change message to the second wireless AP through the third communication link to notify the second wireless AP of establishing a fourth communication link with the AG, wherein the third communication link and the fourth communication link form the second communication link.

5. The method according to any one of claims 1 to 4, wherein the disconnection is caused by an error in the first communication link.

6. A wireless access device, comprising:
a search module (51), adapted to search for a second wireless access point, AP, from other wireless AP(s), if a disconnection of a first communication link between a first wireless AP and an access gateway, AG, occurs, the other wireless AP(s) sharing the same AG with the first wireless AP;
the search module (51) including a first detection unit (511), adapted to detect a wireless AP that has the highest signal transmission power as the second wireless AP; and/or
a second detection unit (512), adapted to detect a wireless AP closest to the first wireless AP under the AG as the second wireless AP;a link establishment module (52), adapted to establish, through the second wireless AP, a second communication link between the first wireless AP and the AG.

7. The device according to claim 6, further comprising:
a communication module (53), adapted to perform data transmission with the AG through the second communication link.

8. The device according to any one of claim 6 or 7, wherein the link establishment module (52) comprises:
an establishment unit (521), adapted to establish a third communication link between the first wireless AP and the second wireless AP;
a signaling sending unit (522), adapted to send a communication link change message to the second wireless AP through the third communication link to notify the second wireless AP of establishing a fourth communication link with the AG, wherein the third communication link and the fourth communication link form the second communication link.

9. The device according to any one of claims 7 or 8, wherein the communication module (53) comprises:
a data receiving unit (531), adapted to receive uplink data from a user equipment, UE, served by the first wireless AP; and
a data sending unit (532), adapted to send the uplink data to the AG through the second communication link, wherein the uplink data is to be added with the ID of the first wireless AP forwarded to the AG by the second wireless AP.

10. The device according to any one of claims 7 or 8, wherein the communication module (53) comprises:
a data receiving unit (531), adapted to receive downlink data from the AG through the second communication link, wherein the downlink data contains an identification, ID, of the first wireless AP added by the second wireless AP; and
a data sending unit (532), adapted to send the downlink data to a UE served by the first wireless AP.

11. The device according to any one of claims 6 to 9, wherein the disconnection is caused by an error.

12. A wireless access system, which comprises a plurality of wireless access points, APs, and an access gateway, AG, wherein at least two of the APs comprise the wireless access device according to any one of claims 6 to 11.

## Patentansprüche

1. Drahtloses Zugangsverfahren, wobei das Verfahren Folgendes umfasst:
falls eine Trennung einer ersten Kommunikationsverbindung zwischen einem ersten drahtlosen Zugangspunkt, AP, und einem Zugangs-Gateway, AG, erfolgt, Suchen (101), durch den ersten drahtlosen AP, nach einem zweiten drahtlosen AP in einem oder mehreren anderen APs, die sich dasselbe AG mit dem ersten drahtlosen AP teilen;
Erhalten der Signalübertragungsleistungen des einen oder der mehreren anderen drahtlosen APs, durch den ersten drahtlosen AP, Vergleichen der Signalübertragungsleistungen des einen oder der mehreren anderen APs, so dass ein drahtloser AP gefunden wird, der die höchste Signalübertragungsleistung aus dem einen oder den mehreren anderen drahtlosen APs aufweist, und Übernehmen des drahtlosen AP als den zweiten drahtlosen AP; oder
Erhalten von Abstandsinformationen des einen oder der mehreren anderen drahtlosen APs, durch den ersten drahtlosen AP, die sich entfernt vom ersten drahtlosen AP dasselbe AG mit dem ersten drahtlosen AP teilen, Finden des nächsten drahtlosen AP und Übernehmen des drahtlosen AP als den zweiten drahtlosen AP; Aufbauen (102), durch den ersten drahtlosen AP, über den zweiten drahtlosen AP, einer zweiten Kommunikationsverbindung mit dem AG zur Datenübertragung mit dem AG.

2. Verfahren nach Anspruch 1, wobei das Aufbauen, über den zweiten drahtlosen AP, einer zweiten Kommunikationsverbindung mit dem AG Folgendes umfasst:
Aufbauen (202), durch den ersten drahtlosen AP, einer dritten Kommunikationsverbindung mit dem zweiten drahtlosen AP und
Senden (203), durch den ersten drahtlosen AP einer Kommunikationsverbindungsänderungsnachricht an den zweiten drahtlosen AP über die dritte Kommunikationsverbindung, so dass der zweite drahtlose AP über das Aufbauen einer vierten Kommunikationsverbindung mit dem AG benachrichtigt wird, wobei die dritte Kommunikationsverbindung und die vierte Kommunikationsverbindung die zweite Kommunikationsverbindung bilden.

3. Verfahren nach einem der Ansprüche 1 bis 2, das ferner Folgendes umfasst:
Empfangen (204), durch den ersten drahtlosen AP, von Aufwärtsstreckendaten von einem Benutzergerät, UE, das durch den ersten drahtlosen AP versorgt wird, und
Senden (205) der Aufwärtsstreckendaten an das AG über die zweite Kommunikationsverbindung, wobei der zweite drahtlose AP eine Identifizierung, ID, des ersten drahtlosen AP zu den Aufwärtsstreckendaten hinzufügt und dann die Aufwärtsstreckendaten an das AG weiterleitet;
oder das ferner Folgendes umfasst:
Empfangen (304), durch den ersten drahtlosen AP, von Abwärtsstreckendaten vom AG über die zweite Kommunikationsverbindung, wobei die Abwärtsstreckendaten eine ID des ersten drahtlosen AP, die durch den zweiten drahtlosen AP hinzugefügt wird, enthalten, und Senden (305) der Abwärtsstreckendaten an das UE, das durch den ersten drahtlosen AP versorgt wird.

4. Verfahren nach Anspruch 1, wobei der erste drahtlose AP zur Datenkommunikation mit dem zweiten drahtlosen AP über eine dritte Kommunikationsverbindung zwischen dem ersten drahtlosen AP und dem zweiten drahtlosen AP in der Lage ist, wobei das Aufbauen, über den zweiten drahtlosen AP, einer zweiten Kommunikationsverbindung mit dem AG Folgendes umfasst:
Senden (203), durch den ersten drahtlosen AP, einer Kommunikationsverbindungsänderungsnachricht an den zweiten drahtlosen AP über die dritte Kommunikationsverbindung, so dass der zweite drahtlose AP über das Aufbauen einer vierten Kommunikationsverbindung mit dem AG benachrichtigt wird, wobei die dritte Kommunikationsverbindung und die vierte Kommunikationsverbindung die zweite Kommunikationsverbindung bilden.

5. Verfahren nach einem der Ansprüche 1 bis 4, wobei die Trennung durch einen Fehler in der ersten Kommunikationsverbindung bewirkt wird.

6. Drahtlose Zugangsvorrichtung, die Folgendes umfasst:
ein Suchmodul (51), das dafür ausgelegt ist, nach einem zweiten drahtlosen Zugangspunkt, AP, in einem oder mehreren anderen APs zu suchen, falls eine Trennung einer ersten Kommunikationsverbindung zwischen einem ersten drahtlosen AP und
einem Zugangs-Gateway, AG, erfolgt, wobei der eine oder die mehreren anderen APs dasselbe AG mit dem ersten drahtlosen AP teilen;
wobei das Suchmodul (51) Folgendes beinhaltet:
eine erste Detektionseinheit (511), die dafür ausgelegt ist, einen drahtlosen AP, der die höchste Signalübertragungsleistung aufweist, als den zweiten drahtlosen AP zu detektieren; und/oder
eine zweite Detektionseinheit (512), die dafür ausgelegt ist, einen drahtlosen AP, der sich am nächsten zu dem ersten drahtlosen AP unter dem AG befindet, als den zweiten drahtlosen AP zu detektieren; ein Verbindungsaufbaumodul (52), das dafür ausgelegt ist, über den zweiten drahtlosen AP, eine zweite Kommunikationsverbindung zwischen dem ersten drahtlosen AP und dem AG aufzubauen.

7. Vorrichtung nach Anspruch 6, die ferner Folgendes umfasst:
ein Kommunikationsmodul (53), das dafür ausgelegt ist, eine Datenübertragung mit dem AG über die zweite Kommunikationsverbindung durchzuführen.

8. Vorrichtung nach einem der Ansprüche 6 oder 7, wobei das Verbindungsaufbaumodul (52) Folgendes umfasst:
eine Aufbaueinheit (521), die dafür ausgelegt ist, eine dritte Kommunikationsverbindung zwischen dem ersten drahtlosen AP und dem zweiten drahtlosen AP aufzubauen;
eine Signalisierungssendeeinheit (522), die dafür ausgelegt ist, eine Kommunikationsverbindungsänderungsnachricht an den zweiten drahtlosen AP über die dritte Kommunikationsverbindung zu senden, so dass der zweite drahtlose AP über das Aufbauen einer vierten Kommunikationsverbindung mit dem AG benachrichtigt wird, wobei die dritte Kommunikationsverbindung und die vierte Kommunikationsverbindung die zweite Kommunikationsverbindung bilden.

9. Vorrichtung nach einem der Ansprüche 7 oder 8, wobei das Kommunikationsmodul (53) Folgendes umfasst:
eine Datenempfangseinheit (531), die dafür ausgelegt ist, Aufwärtsstreckendaten von einem Benutzergerät, UE, das durch den ersten drahtlosen AP versorgt wird, zu empfangen; und
eine Datensendeeinheit (532), die dafür ausgelegt ist, die Aufwärtsstreckendaten an das AG über die zweite Kommunikationsverbindung zu senden, wobei zu den Aufwärtsstreckendaten die ID des ersten drahtlosen AP, die durch den zweiten drahtlosen AP an das AG weitergeleitet wird, hinzugefügt werden soll.

10. Vorrichtung nach einem der Ansprüche 7 oder 8, wobei das Kommunikationsmodul (53) Folgendes umfasst:
eine Datenempfangseinheit (531), die dafür ausgelegt ist, Abwärtsstreckendaten vom AG über die zweite Kommunikationsverbindung zu empfangen, wobei die Abwärtsstreckendaten eine Identifizierung, ID, des ersten drahtlosen AP, die durch den zweiten drahtlosen AP hinzugefügt wird, enthalten; und
eine Datensendeeinheit (532), die dafür ausgelegt ist, die Abwärtsstreckendaten an ein UE, das durch den ersten drahtlosen AP versorgt wird, zu senden.

11. Vorrichtung nach einem der Ansprüche 6 bis 9, wobei die Trennung durch einen Fehler bewirkt wird.

12. Drahtloses Zugangssystem, das mehrere drahtlose Zugangspunkte, APs, und ein Zugangs-Gateway, AG, umfasst, wobei mindestens zwei der APs die drahtlose Zugangsvorrichtung nach einem der Ansprüche 6 bis 11 umfassen.

## Revendications

1. Procédé d'accès sans fil, le procédé comprenant :
en cas de déconnexion d'une première liaison de communication entre un premier point d'accès sans fil, AP, et une passerelle d'accès, AG, la recherche (101), par le premier AP sans fil, d'un second AP sans fil parmi d'autres AP sans fil qui partagent la même AG avec le premier AP sans fil ;
l'obtention des puissances d'émission de signal des autres AP sans fil, par le premier AP sans fil, la comparaison des puissances d'émission du signal des autres AP sans fil pour trouver un AP sans fil qui a la plus haute puissance d'émission du signal parmi les autres AP sans fil, et l'utilisation de l'AP sans fil comme second AP sans fil ; ou
l'obtention d'informations de distance des autres AP sans fil, par le premier AP sans fil, qui partagent la même AG avec le premier AP sans fil à distance du premier AP sans fil, la recherche de l'AP sans fil le plus proche, et l'utilisation de l'AP sans fil comme second AP sans fil ; l'établissement (102), par le premier AP sans fil, par le biais du second AP sans fil, d'une deuxième liaison de communication avec l'AG pour la transmission de données avec l'AG.

2. Procédé selon la revendication 1, dans lequel l'établissement par le biais du second AP sans fil d'une deuxième liaison de communication avec l'AG comprend :
l'établissement (202), par le premier AP sans fil, d'une troisième liaison de communication avec le second AP sans fil ; et
l'envoi (203), par le premier AP sans fil, d'un message de changement de liaison de communication au second AP sans fil par le biais de la troisième liaison de communication pour notifier le second AP sans fil d'établir une quatrième liaison de communication avec l'AG, la troisième liaison de communication et la quatrième liaison de communication formant la deuxième liaison de communication.

3. Procédé selon l'une quelconque des revendications 1 à 2, comprenant en outre :
la réception (204), par le premier AP sans fil, de données de liaison montante depuis un équipement utilisateur, UE, desservi par le premier AP sans fil et l'envoi (205) des données de liaison montante à l'AG par le biais de la deuxième liaison de communication, dans lequel le second AP sans fil ajoute une identification, ID, du premier AP sans fil aux données de liaison montante puis transmet les données de liaison montante à l'AG ;
ou comprenant en outre :
la réception (304), par le premier AP sans fil, de données de liaison descendante depuis l'AG par le biais de la deuxième liaison de communication, dans lequel les données de liaison descendante contiennent une ID du premier AP sans fil ajoutée par le second AP sans fil, et l'envoi (305) des données de liaison descendante à l'UE desservi par le premier AP sans fil.

4. Procédé selon la revendication 1, dans lequel le premier AP sans fil est capable d'une communication de données avec le second AP sans fil par le biais d'une troisième liaison de communication entre le premier AP sans fil et le second AP sans fil, dans lequel l'établissement par le biais du second AP sans fil d'une deuxième liaison de communication avec l'AG comprend :
l'envoi (203), par le premier AP sans fil, d'un message de changement de liaison de communication au second AP sans fil par le biais de la troisième liaison de communication pour notifier le second AP sans fil d'établir une quatrième liaison de communication avec l'AG, la troisième liaison de communication et la quatrième liaison de communication formant la deuxième liaison de communication.

5. Procédé selon l'une quelconque des revendications 1 à 4, dans lequel la déconnexion est causée par une erreur dans la première liaison de communication.

6. Dispositif d'accès sans fil, comprenant :
un module de recherche (51), adapté pour rechercher un second point d'accès sans fil, AP, parmi d'autres AP sans fil, en cas de déconnexion d'une première liaison de communication entre un premier AP sans fil et une passerelle d'accès, AG, les autres AP sans fil partageant la même AG avec le premier AP sans fil ;
le module de recherche (51) comportant
une première unité de détection (511) adaptée pour détecter un AP sans fil qui a la plus haute puissance d'émission de signal comme second AP sans fil ; et/ou
une seconde unité de détection (512), adaptée pour détecter un AP sans fil le plus proche du premier AP sans fil sous l'AG comme second AP sans fil ; un module d'établissement de liaison (52), adapté pour établir, par le biais du second AP sans fil, une deuxième liaison de communication entre le premier AP sans fil et l'AG.

7. Dispositif selon la revendication 6, comprenant en outre :
un module de communication (53), adapté pour exécuter une transmission de données avec l'AG par le biais de la deuxième liaison de communication.

8. Dispositif selon l'une quelconque des revendications 6 ou 7, dans lequel le module d'établissement de liaison (52) comprend :
une unité d'établissement (521), adaptée pour établir une troisième liaison de communication entre le premier AP sans fil et le second AP sans fil ;
une unité d'envoi de signalisation (522), adaptée pour envoyer un message de changement de liaison de communication au second AP sans fil par le biais de la troisième liaison de communication pour notifier le second AP sans fil d'établir une quatrième liaison de communication avec l'AG, la troisième liaison de communication et la quatrième liaison de communication formant la deuxième liaison de communication.

9. Dispositif selon l'une quelconque des revendications 7 ou 8, dans lequel le module de communication (53) comprend :
une unité de réception de données (531), adaptée pour recevoir des données de liaison montante depuis un équipement utilisateur, UE, desservi par le premier AP sans fil ; et
une unité d'envoi de données (532), adaptée pour envoyer les données de liaison montante à l'AG par le biais de la deuxième liaison de communication, dans lequel les données de liaison montante vont être complétées par l'ID du premier AP sans fil transmise à l'AG par le second AP sans fil.

10. Dispositif selon l'une quelconque des revendications 7 ou 8, dans lequel le module de communication (53) comprend :
une unité de réception de données (531), adaptée pour recevoir des données de liaison descendante depuis l'AG par le biais de la deuxième liaison de communication, dans lequel les données de liaison descendante contiennent une identification, ID, du premier AP sans fil ajoutée par le second AP sans fil ; et
une unité d'envoi de données (532), adaptée pour envoyer les données de liaison descendante à l'UE desservi par le premier AP sans fil.

11. Dispositif selon l'une quelconque des revendications 6 à 9, dans lequel la déconnexion est causée par une erreur.

12. Système d'accès sans fil, lequel comprend une pluralité de points d'accès sans fil, AP, et une passerelle d'accès, AG, dans lequel au moins deux des AP comprennent le dispositif d'accès sans fil selon l'une quelconque des revendications 6 à 11.
